# EUROPÄISCHE PATENTSCHRIFT

(11) **EP 3 184 997 B1**
(45) Veröffentlichungstag und Bekanntmachung des Hinweises auf die Patenterteilung: **16.09.2020**
(21) Anmeldenummer: 16205209.6
(22) Anmeldetag: 20.12.2016
(51) Int. Cl.: G01N 21/956

(54) **INSPEKTIONSVORRICHTUNG UND VERFAHREN ZUM VERIFIZIEREN EINES CHIPKARTENHALBZEUGS**
INSPECTION DEVICE AND METHOD FOR VERIFYING A SEMIFINISHED CHIP CARD PRODUCT
DISPOSITIF D'INSPECTION ET PROCÉDÉ DE VÉRIFICATION D'UN DEMI-PRODUIT DE CARTE À PUCE

(30) Priorität: 23.12.2015 DE 102015122726
(43) Veröffentlichungstag der Anmeldung: 28.06.2017
(73) Patentinhaber: Bundesdruckerei GmbH, 10969 Berlin (DE)
(72) Erfinder: FERBER, Alexander, 12105 Berlin (DE); KLOESER, Joachim, 10779 Berlin (DE); ROSSEK, Kai, 12349 Berlin (DE); MUTH, Oliver, 12277 Berlin (DE)
(74) Vertreter: Patentship Patentanwaltsgesellschaft mbH

(56) Entgegenhaltungen:
- EP-A1- 2 583 826
- DE-A1-102012 223 472
- JP-A- H0 587 546
- US-A- 4 390 955

## Beschreibung

Die vorliegende Erfindung betrifft eine Inspektionsvorrichtung und ein Verfahren zum Verifizieren eines Halbzeugs zum Herstellen einer Chipkarte mit einem elektronischen Schaltkreis in Form eines Chips oder Chipmoduls.

Die Offenlegungsschrift JP H 0587546 A zeigt eine Inspektionsvorrichtung zum Überprüfen eines Chip Resistors.

Die Offenlegungsschrift DE 10 2012 223 472 A1 beschreibt ein Verfahren zur Herstellung eines Wert- und/oder Sicherheitsdokuments mit einer Antennenstruktur.

Moderne elektronische Identifikationsdokumente, beispielsweise elektronische Personalausweise, sind oftmals in Form einer Chipkarte ausgebildet. Chipkarten können ferner als Kreditkarten, Bankkarten, elektronische Börsen usw. ausgebildet sein und zur bargeldlosen Abwicklung von Transaktionen, wie beispielsweise zum Entrichten eines Beförderungsentgelts im Personennahverkehr oder zum Bezahlen eines Kaufpreises für eine Ware oder Dienstleistung, dienen.

Eine Chipkarte umfasst in der Regel einen Kartenkörper und einen in den Kartenkörper integrierten elektronischen Schaltkreis in Form eines Chips oder Chipmoduls, der zur Speicherung, Verarbeitung und/oder Erkennung von Informationen ausgebildet ist, die kontaktlos und/oder kontaktbehaftet mit einem Lesegerät ausgetauscht werden können.

Üblicherweise besteht der Kartenkörper einer Chipkarte aus mehreren Folien oder Lagen aus Kunststoff. Aus der WO2011/003518 und der DE102011001722 sind beispielhafte Herstellungsverfahren bekannt, bei denen ein auf einer Trägerfolie beispielsweise mittels Klebstoff befestigter elektronischer Schaltkreis in Form eines Chips oder Chipmoduls passgenau in eine Aussparung eingebracht wird, die in einer sogenannten Ausgleichsfolie ausgebildet ist. Dabei kann insbesondere bei Chipkarten, die kontaktlos mit einem Lesegerät kommunizieren, die Trägerfolie eine Antennenstruktur umfassen, die mit dem elektronischen Schaltkreis elektrisch verbunden ist. Oftmals wird die Aussparung zur Aufnahme des elektronischen Schaltkreises in der Ausgleichsfolie mittels Laserschneiden erzeugt. Die Aussparung kann jedoch auch beispielsweise durch ein Ausstanzen erzeugt werden. Zur Fertigstellung einer Chipkarte können eine oder mehrere weitere Folien bzw. Lagen auf die Ober- und/oder Unterseite des aus Trägerfolie, Chip und Ausgleichsfolie bestehenden Halbzeugs, das auch als Inlay bezeichnet wird, laminiert werden, um den elektronischen Schaltkreis in den dadurch entstehenden Kartenkörper einzubetten.

Treten im Rahmen der Chipkartenherstellung bei einem Halbzeug Fehler hinsichtlich der Ausrichtung und/oder Anordnung des elektronischen Schaltkreises relativ zu der Aussparung in der Ausgleichsfolie oder Beschädigungen des elektronischen Schaltkreises auf, so kann dies dazu führen, dass die fertiggestellte Chipkarte von vornherein nicht funktionsfähig ist oder unter den normalen Einflüssen, denen eine Chipkarte beim Einsatz ausgesetzt ist, nach kurzer Zeit im Feld ihre Funktionsfähigkeit verliert.

Daher besteht eine Aufgabe der vorliegenden Erfindung darin, ein Konzept zum automatisierten Verifizieren eines Chipkartenhalbzeugs mit einem elektronischen Schaltkreis in Form eines Chips oder Chipmoduls zu schaffen, um insbesondere die vorstehend beschriebenen Probleme bei der Herstellung von Chipkarten vermeiden zu können.

Diese Aufgabe wird durch die Merkmale der unabhängigen Ansprüche gelöst. Vorteilhafte Ausbildungsformen sind Gegenstand der abhängigen Patentansprüche, der Beschreibung sowie der Figuren.

Gemäß einem ersten Aspekt betrifft die Erfindung eine Inspektionsvorrichtung zum Verifizieren eines Chipkartenhalbzeugs mit einem elektronischen Schaltkreis. Die Inspektionsvorrichtung umfasst eine Beleuchtungsquelle, welche ausgebildet ist, das Halbzeug mit Licht einer vorbestimmten Wellenlänge zu beleuchten, eine Bildkamera, welche ausgebildet ist, eine Bildaufnahme des beleuchteten Halbzeugs mit dem elektronischen Schaltkreis zu erfassen, und einen Prozessor, welcher ausgebildet ist, in der Bildaufnahme eine Kontur des elektronischen Schaltkreises zu erfassen und auf der Grundlage der erfassten Kontur des elektronischen Schaltkreises das Halbzeug zu verifizieren.

Dadurch wird ein effizientes Konzept zum automatisierten Verifizieren eines Chipkartenhalbzeugs mit einem elektronischen Schaltkreis in Form eines Chips oder Chipmoduls geschaffen.

Erfindungsgemäß ist der Prozessor ausgebildet, die Größe der von der Kontur des elektronischen Schaltkreises in der Bildaufnahme begrenzten Fläche zu bestimmen und das Halbzeug auf der Grundlage der von der Kontur in der Bildaufnahme begrenzten Fläche zu verifizieren. Dadurch wird beispielsweise der Vorteil erreicht, dass automatisiert überprüft werden kann, ob der elektronische Schaltkreis eines Halbzeugs möglicherweise beschädigt, beispielsweise gebrochen ist.

Gemäß einer Ausführungsform ist der Prozessor ausgebildet, in der Bildaufnahme innerhalb der Kontur des elektronischen Schaltkreises zusammenhängende Pixel zu bestimmen, deren Lichtintensität kleiner als ein erster Schwellenwert ist, um die Größe der von der Kontur des elektronischen Schaltkreises begrenzten Fläche zu bestimmen. Dadurch wird beispielsweise der Vorteil erreicht, dass sich die durch die Kontur des elektronischen Schaltkreises in der Bildaufnahme begrenzte Fläche effizient automatisiert bestimmen lässt.

Erfindungsgemäß ist der Prozessor ausgebildet, die Kontur des elektronischen Schaltkreises, insbesondere durch Kantenerkennung oder Mustererkennung, zu erfassen. Dadurch wird beispielsweise der Vorteil erreicht, dass die Analyse und/der Verarbeitung der Bildaufnahme durch den Prozessor effizienter durchgeführt werden kann.

Gemäß einer Ausführungsform ist die Bildkamera ausgebildet, die Bildaufnahme zu überbelichten, um in der Bildaufnahme Bereiche außerhalb der Kontur des elektronischen Schaltkreises auszublenden. Dadurch wird beispielsweise der Vorteil erreicht, dass z.B. eine in dem Halbzeug ausgebildete Antennenstruktur, die in der Bildaufnahme außerhalb der Kontur des elektronischen Schaltkreises erscheinen würde, ausgeblendet werden kann und somit das Erfassen der Kontur des elektronischen Schaltkreises nicht stört.

Gemäß einer Ausführungsform ist die Beleuchtungsquelle ausgebildet, das Halbzeug mit Licht einer vorbestimmten Intensität zu überbelichten, um in der Bildaufnahme Bereiche außerhalb der Kontur des elektronischen Schaltkreises auszublenden. Dadurch wird beispielsweise der Vorteil erreicht, dass z.B. eine in dem Halbzeug ausgebildete Antennenstruktur, die in der Bildaufnahme außerhalb der Kontur des elektronischen Schaltkreises erscheinen würde, ausgeblendet werden kann und somit das Erfassen der Kontur des elektronischen Schaltkreises nicht stört.

Gemäß einer Ausführungsform ist die Beleuchtungsquelle ausgebildet, das Halbzeug mit UV-Licht zu beleuchten, oder die Bildkamera ausgebildet, die Bildaufnahme im UV-Licht zu erfassen.

Gemäß einem zweiten Aspekt betrifft die Erfindung ein Verfahren zum Verifizieren eines Halbzeugs zum Herstellen einer Chipkarte mit einem elektronischen Schaltkreis. Das Verfahren umfasst die folgenden Schritte: das Beleuchten des Halbzeugs mittels einer Beleuchtungsquelle; das Erfassen einer Bildaufnahme des beleuchteten Halbzeugs mit dem elektronischen Schaltkreis mittels einer Bildkamera; das Erfassen einer Kontur des elektronischen Schaltkreises in der Bildaufnahme; und das Verifizieren des Halbzeugs auf der Grundlage der erfassten Kontur des elektronischen Schaltkreises.

Erfindungsgemäß umfasst der Schritt des Erfassens der Kontur des elektronischen Schaltkreises das Bestimmen der Größe der von der Kontur des elektronischen Schaltkreises in der Bildaufnahme begrenzten Fläche und der Schritt des Verifizierens des Halbzeugs umfasst das Verifizieren des Halbzeugs auf der Grundlage der von der Kontur in der Bildaufnahme begrenzten Fläche.

Gemäß einer Ausführungsform wird die Größe der von der Kontur des elektronischen Schaltkreises begrenzten Fläche in der Bildaufnahme bestimmt, indem in der Bildaufnahme innerhalb der Kontur des elektronischen Schaltkreises zusammenhängende Pixel bestimmt werden, deren Lichtintensität kleiner als ein erster Schwellenwert ist.

Erfindungsgemäß wird die Kontur des elektronischen Schaltkreises in der Bildaufnahme, insbesondere durch Kantenerkennung oder Mustererkennung, erfasst.

Gemäß einer Ausführungsform wird die Bildaufnahme durch die Bildkamera überbelichtet, um in der Bildaufnahme Bereiche außerhalb der Kontur des elektronischen Schaltkreises auszublenden.

Gemäß einer Ausführungsform wird das Halbzeug mittels der Beleuchtungsquelle mit Licht einer vorbestimmten Intensität überbelichtet, um in der Bildaufnahme Bereiche außerhalb der Kontur des elektronischen Schaltkreises auszublenden.

Gemäß einer Ausführungsform umfasst der Schritt des Beleuchtens des Halbzeugs mittels der Beleuchtungsquelle das Beleuchten des Halbzeugs mit UV-Licht oder der Schritt des Erfassens der Bildaufnahme des beleuchteten Halbzeugs mit dem elektronischen Schaltkreis mittels der Bildkamera umfasst das Erfassen der Bildaufnahme im UV-Licht.

Die Inspektionsvorrichtung gemäß dem ersten Aspekt der Erfindung ist dazu ausgebildet, das Verfahren gemäß dem zweiten Aspekt der Erfindung auszuführen. Weitere Ausführungsformen des Verfahrens gemäß dem zweiten Aspekt der Erfindung ergeben sich aus den vorstehend und nachstehend beschriebenen Ausführungsformen der Inspektionsvorrichtung gemäß dem ersten Aspekt der Erfindung.

Die Erfindung kann in Hardware und/oder Software realisiert werden.

Weitere Ausführungsbeispiele werden Bezug nehmend auf die beiliegenden Figuren näher erläutert. Es zeigen:
- Fig. 1: ein schematisches Diagramm einer Inspektionsvorrichtung zum Verifizieren eines Chipkartenhalbzeugs mit einem elektronischen Schaltkreis gemäß einer Ausführungsform; und
- Fig. 2: ein Diagramm mit den Schritten eines Verfahrens zum Verifizieren eines Chipkartenhalbzeugs gemäß einer Ausführungsform.

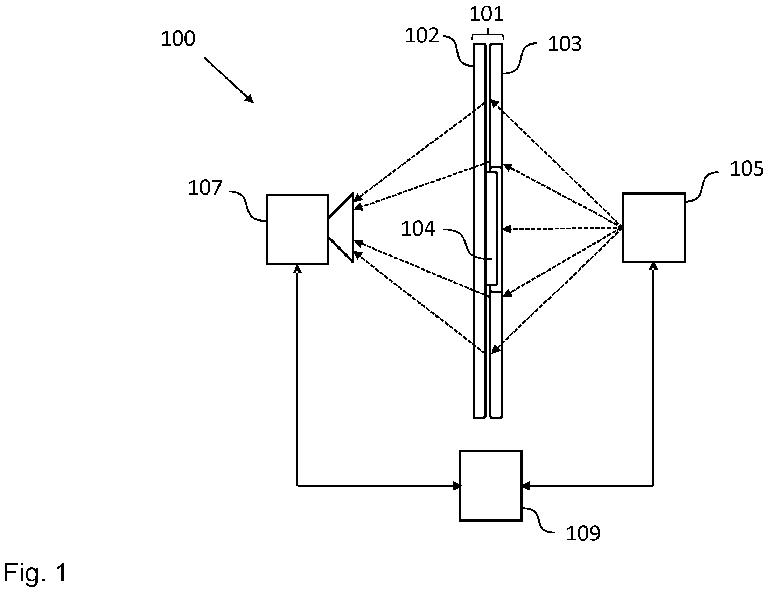

Figur 1 zeigt ein Diagramm in Form einer schematischen Seitenansicht (teilweise im Querschnitt) einer Inspektionsvorrichtung 100 zum Verifizieren eines Halbzeugs 101 mit einem elektronischen Schaltkreis 104 in Form eines Chips oder Chipmoduls.

Bei der in Figur 1 gezeigten Ausführungsform umfasst das Halbzeug 101, das auch als Inlay bezeichnet wird, eine Trägerfolie 102 und eine Ausgleichsfolie 103. Der elektronische Schaltkreis 104 kann beispielsweise mittels eines Klebstoffs auf der Trägerfolie 102 befestigt sein. In der Ausgleichsfolie 103 ist eine Aussparung ausgebildet, um den elektronischen Schaltkreis 104 aufzunehmen. Die Trägerfolie 102 und/oder die Ausgleichsfolie 103 können aus einem Kunststoffmaterial, insbesondere aus PC, PVC, ABS oder PET, bestehen.

Die in Figur 1 dargestellte Inspektionsvorrichtung 100 umfasst eine Beleuchtungsquelle 105, welche ausgebildet ist, das Halbzeug 101 mit Licht einer vorbestimmten Wellenlänge zu beleuchten, wie dies in Figur 1 schematisch dargestellt ist. Gemäß einer Ausführungsform ist die Beleuchtungsquelle 105 ausgebildet, das Halbzeug 101 mit UV-Licht zu beleuchten. Bei der Beleuchtungsquelle 105 kann es sich beispielsweise um eine diffuse Lichtquelle oder um eine Punklichtquelle handeln.

Die Inspektionsvorrichtung 100 umfasst ferner eine Bildkamera 107, welche ausgebildet ist, eine Bildaufnahme des beleuchteten Halbzeugs 101 mit dem elektronischen Schaltkreis 104 zu erfassen. Hierzu kann das Halbzeug 101 zwischen der Beleuchtungsquelle 105 und der Bildkamera 107 angeordnet sein. In dem Fall einer Beleuchtungsquelle 105 in Form einer Punktlichtquelle kann die Punktlichtquelle relativ zu der Bildkamera 107 von dem elektronischen Schaltkreis 104 verdeckt werden. Ebenso können die Beleuchtungsquelle 105 und die Bildkamera 107 auf derselben Seite des Halbzeugs 101 angeordnet sein. Bei der Bildkamera 107 kann es sich insbesondere um eine Digitalbildkamera handeln. Gemäß einer Ausführungsform ist die Bildkamera 107 ausgebildet, die Bildaufnahme des beleuchteten Halbzeugs 101 mit dem elektronischen Schaltkreis 104 im UV-Licht zu erfassen.

Die Inspektionsvorrichtung 100 umfasst ferner einen Prozessor 109, welcher ausgebildet ist, in der Bildaufnahme eine Kontur des elektronischen Schaltkreises 104 zu erfassen und auf der Grundlage der erfassten Kontur des elektronischen Schaltkreises 104 das Halbzeug 101 zu verifizieren. Gemäß einer Ausführungsform ist der Prozessor 109 ausgebildet, die Kontur des elektronischen Schaltkreises 104, insbesondere durch Kantenerkennung oder Mustererkennung, zu erfassen.

Gemäß einer Ausführungsform kann ein Verifizieren des Halbzeugs 101 auf der Grundlage der erfassten Kontur des elektronischen Schaltkreises 104 durch den Prozessor 109 beispielsweise eine Bewertung durch den Prozessor 109 umfassen, ob das Halbzeug 101 fehlerfrei ist oder möglicherweise einen Fehler aufweist und daher näher untersucht und/oder aussortiert werden sollte.

Der Prozessor 109 kann Teil eines Computers (nicht dargestellt) sein, der ein Display zur Anzeige der von der Bildkamera 107 erfassten und vom Prozessor 109 gegebenenfalls weiter verarbeiteten Bildaufnahme umfassen kann.

Gemäß einer Ausführungsform kann der Prozessor 109 ausgebildet sein, auf der Grundlage der erfassten Kontur des elektronischen Schaltkreises 104 zu bestimmen, ob das Halbzeug 101 überhaupt mit einem elektronischen Schaltkreis bestückt ist, d.h. ob überhaupt ein elektronischer Schaltkreis in der Bildaufnahme vorhanden ist (Chip vorhanden ja/nein?) und/oder ob die Anordnung/Lage und oder die Orientierung des elektronischen Schaltkreises 104 relativ zu dem Halbzeug 101 stimmt.

Erfindungsgemäß ist der Prozessor 109 ausgebildet, die Größe der von der Kontur des elektronischen Schaltkreises begrenzten Fläche in der Bildaufnahme zu bestimmen und das Halbzeug 101 auf der Grundlage der Größe der von der Kontur begrenzten Fläche zu verifizieren.

Erfindungsgemäß ist der Prozessor 109 ausgebildet ; auf der Grundlage der Größe der von der Kontur begrenzten Fläche zu bestimmen, ob der elektronische Schaltkreis 104 die korrekten Abmessungen aufweist (Chip korrekte Abmessungen / Chip gebrochen?). Beispielsweise könnte der Prozessor 109 ein Halbzeug 101 verwerfen, falls die Größe der von der Kontur des elektronischen Schaltkreises 104 begrenzten Fläche kleiner als ein erster Flächenschwellenwert ist, da ein Bruch des elektronischen Schaltkreises 104 eine Ursache für die kleinere Fläche der Kontur des elektronischen Schaltkreises 104 sein könnte. Ebenso könnte der Prozessor 109 ausgebildet sein, ein Halbzeug 101 zu verwerfen, falls die Größe der von der Kontur des elektronischen Schaltkreises 104 begrenzten Fläche größer als ein zweiter Flächenschwellenwert ist, der größer als der erste Flächenschwellenwert ist, da dies dafür sprechen könnte, dass versehentlich das Halbzeug 101 mit mehr als einem elektronischen Schaltkreis 104 bestückt worden ist.

Gemäß einer Ausführungsform ist der Prozessor 109 ausgebildet, in der Bildaufnahme innerhalb der Kontur des elektronischen Schaltkreises 104 die Anzahl der zusammenhängenden Pixel zu bestimmen, deren Lichtintensität kleiner als ein erster Intensitätsschwellenwert ist, um die Größe der von der Kontur des elektronischen Schaltkreises 104 begrenzten Fläche zu bestimmen. Ein beispielhafter erster Intensitätsschwellenwert kann 1%, 5% oder 10% der in der Bildaufnahme auftretenden Maximalintensität betragen.

Gemäß einer Ausführungsform ist die Bildkamera 107 ausgebildet, die Bildaufnahme zu überbelichten, um in der Bildaufnahme Bereiche außerhalb der Kontur des elektronischen Schaltkreises 104 auszublenden. Alternativ oder zusätzlich ist die Beleuchtungsquelle 105 ausgebildet ist, das Halbzeug 101 mit Licht einer vorbestimmten Intensität zu überbelichten, um in der Bildaufnahme Bereiche außerhalb der Kontur des elektronischen Schaltkreises 104 auszublenden.

Mittels einer solchen Überbelichtung durch eine geeignete Ansteuerung der Beleuchtungsquelle 105 (z.B. über die Intensität der Beleuchtungsquelle 105) und/oder der Bildkamera 107 (z.B. über die Belichtungszeit) durch den Prozessor 109 kann die Analyse und Verarbeitung der Bildaufnahme durch den Prozessor 109 effizienter durchgeführt werden. Beispielsweise führt bei der in Figur 1 dargestellten Ausführungsform eine Überbelichtung zu einer Kontrastverstärkung in der Bildaufnahme zwischen den Pixeln der Bildaufnahme, welche den elektronischen Schaltkreis 104 abbilden (die in der Regel eine minimale Intensität aufweisen, da das von der Beleuchtungsquelle 105 emittierte Licht vom elektronischen Schaltkreis 104 nicht durchgelassen wird), und den Pixeln, welche die Bereiche des Halbzeugs 101 außerhalb des elektronischen Schaltkreises 104 abbilden. Die Pixel der Bildaufnahme, die Bereiche des Halbzeugs 101 außerhalb des elektronischen Schaltkreises 104 abbilden, können durch eine Überbelichtung saturiert werden und somit bei der Auswertung besser berücksichtigt werden. Beispielsweise kann durch eine solche Überbelichtung eine Antennenstruktur, die beispielsweise in der Trägerfolie 102 des Halbzeugs 101 ausgebildet ist, in der Bildaufnahme in den Bereichen außerhalb der Kontur des elektronischen Schaltkreises 104 ausgeblendet werden.

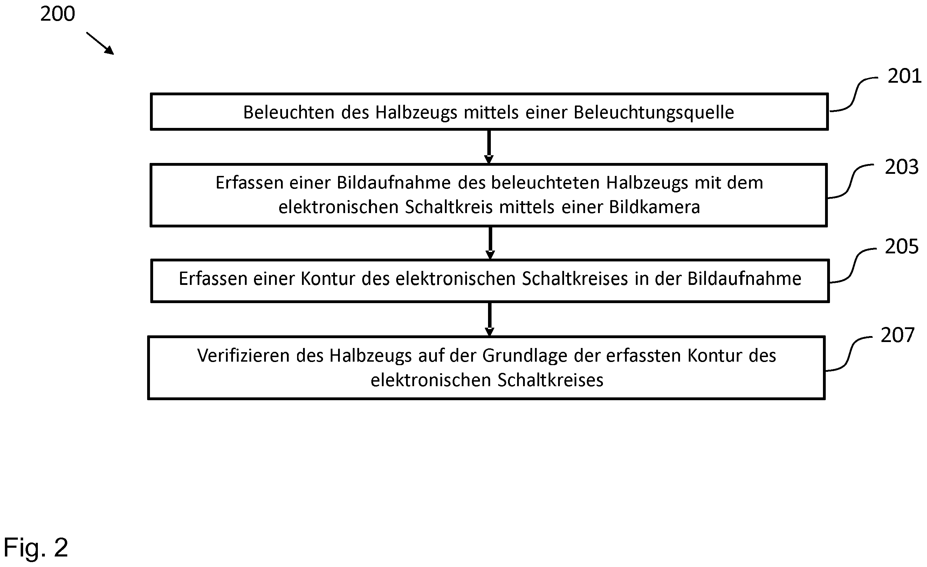

Figur 2 zeigt ein schematisches Diagramm eines Verfahrens 200 zum Verifizieren eines Halbzeugs 101 zum Herstellen einer Chipkarte mit einem elektronischen Schaltkreis 104, das nachstehend anhand der in Figur 1 dargestellten Inspektionsvorrichtung 100 detaillierter beschrieben wird. Das Verfahren 200 umfasst einen Schritt 201 des Beleuchtens des Halbzeugs 101 mittels der Beleuchtungsquelle 105, einen Schritt 203 des Erfassens einer Bildaufnahme des beleuchteten Halbzeugs mit dem elektronischen Schaltkreis mittels der Bildkamera 107, einen Schritt 205 des Erfassens einer Kontur des elektronischen Schaltkreises in der Bildaufnahme und einen Schritt 207 des Verifizierens des Halbzeugs auf der Grundlage der erfassten Kontur des elektronischen Schaltkreises 104.

Erfindungsgemäß umfasst der Schritt 205 des Erfassens der Kontur des elektronischen Schaltkreises 104 das Bestimmen der Größe der von der Kontur des elektronischen Schaltkreises 104 begrenzten Fläche und der Schritt 207 des Verifizierens des Halbzeugs 101 das Verifizieren des Halbzeugs 101 auf der Grundlage der Größe der von der Kontur begrenzten Fläche.

Gemäß einer Ausführungsform wird die Größe der von der Kontur des elektronischen Schaltkreises 104 begrenzten Fläche bestimmt, indem in der Bildaufnahme innerhalb der Kontur des elektronischen Schaltkreises 104 die Anzahl der zusammenhängenden Pixel bestimmt wird, deren Lichtintensität kleiner als ein erster Intensitätsschwellenwert ist.

Erfindungsgemäß wird die Kontur des elektronischen Schaltkreises 104, insbesondere durch Kantenerkennung oder Mustererkennung, erfasst.

Gemäß einer Ausführungsform kann die Bildaufnahme durch die Bildkamera 107 überbelichtet werden, um in der Bildaufnahme Bereiche außerhalb der Kontur des elektronischen Schaltkreises auszublenden.

Gemäß einer Ausführungsform kann das Halbzeug 101 mittels der Beleuchtungsquelle 105 mit Licht einer vorbestimmten Intensität überbelichtet werden, um in der Bildaufnahme Bereiche außerhalb der Kontur des elektronischen Schaltkreises 104 auszublenden.

Gemäß einer Ausführungsform umfasst der Schritt 201 des Beleuchtens des Halbzeugs 101 mittels der Beleuchtungsquelle 105 das Beleuchten des Halbzeugs 101 mit UV-Licht und/oder der Schritt 203 des Erfassens der Bildaufnahme des beleuchteten Halbzeugs 101 mit dem elektronischen Schaltkreis 104 mittels der Bildkamera 107 umfasst das Erfassen der Bildaufnahme im UV-Licht.

### BEZUGSZEICHENLISTE

- 100: Inspektionsvorrichtung
- 101: Halbzeug
- 102: Trägerfolie
- 103: Ausgleichsfolie
- 104: elektronischer Schaltkreis
- 105: Beleuchtungsquelle
- 107: Bildkamera
- 109: Prozessor

- 200: Verfahren zum Verifizieren eines Halbzeugs mit einem elektronischen Schaltkreis
- 201: Beleuchten des Halbzeugs
- 203: Erfassen einer Bildaufnahme des Halbzeugs
- 205: Erfassen einer Kontur des elektronischen Schaltkreises
- 207: Verifizieren des Halbzeugs anhand der Kontur

## Patentansprüche

1. Inspektionsvorrichtung (100) zum Verifizieren eines Halbzeugs (101) zum Herstellen einer Chipkarte mit einem elektronischen Schaltkreis (104) mit:
einer Beleuchtungsquelle (105), welche ausgebildet ist, das Halbzeug (101) mit Licht einer vorbestimmten Wellenlänge zu beleuchten;
einer Bildkamera (107), welche ausgebildet ist, eine Bildaufnahme des beleuchteten Halbzeugs (101) mit dem elektronischen Schaltkreis (104) zu erfassen; und
einem Prozessor (109), welcher ausgebildet ist, in der Bildaufnahme eine Kontur des elektronischen Schaltkreises (104) zu erfassen und auf der Grundlage der erfassten Kontur des elektronischen Schaltkreises (104) das Halbzeug (101) zu verifizieren, wobei der Prozessor (109) ausgebildet ist, die Größe der von der Kontur des elektronischen Schaltkreises (104) begrenzten Fläche zu bestimmen und das Halbzeug (101) auf der Grundlage der Größe der von der Kontur begrenzten Fläche zu verifizieren.

2. Inspektionsvorrichtung (100) nach Anspruch 1, wobei der Prozessor (109) ausgebildet ist, in der Bildaufnahme innerhalb der Kontur des elektronischen Schaltkreises (104) die Anzahl der zusammenhängenden Pixel zu bestimmen, deren Lichtintensität kleiner als ein erster Intensitätsschwellenwert ist, um die Größe der von der Kontur des elektronischen Schaltkreises (104) begrenzten Fläche zu bestimmen.

3. Inspektionsvorrichtung (100) nach einem der vorstehenden Ansprüche, wobei der Prozessor (109) ausgebildet ist, die Kontur des elektronischen Schaltkreises (104), insbesondere durch Kantenerkennung oder Mustererkennung, zu erfassen.

4. Inspektionsvorrichtung (100) nach einem der vorstehenden Ansprüche, wobei die Bildkamera (107) ausgebildet ist, die Bildaufnahme zu überbelichten, um in der Bildaufnahme Bereiche außerhalb der Kontur des elektronischen Schaltkreises (104) auszublenden.

5. Inspektionsvorrichtung (100) nach einem der vorstehenden Ansprüche, wobei die Beleuchtungsquelle (105) ausgebildet ist, das Halbzeug (101) mit Licht einer vorbestimmten Intensität zu überbelichten, um in der Bildaufnahme Bereiche außerhalb der Kontur des elektronischen Schaltkreises (104) auszublenden.

6. Inspektionsvorrichtung (100) nach einem der vorstehenden Ansprüche, wobei die Beleuchtungsquelle (105) ausgebildet ist, das Halbzeug (101) mit UV-Licht zu beleuchten, oder die Bildkamera (107) ausgebildet ist, die Bildaufnahme im UV-Licht zu erfassen.

7. Verfahren (200) zum Verifizieren eines Halbzeugs (101) zum Herstellen einer Chipkarte mit einem elektronischen Schaltkreis (104) mit:
Beleuchten (201) des Halbzeugs (101) mittels einer Beleuchtungsquelle (105);
Erfassen (203) einer Bildaufnahme des beleuchteten Halbzeugs (101) mit dem elektronischen Schaltkreis (104) mittels einer Bildkamera (107);
Erfassen (205) einer Kontur des elektronischen Schaltkreises (104) in der Bildaufnahme; und
Verifizieren (207) des Halbzeugs (101) auf der Grundlage der erfassten Kontur des elektronischen Schaltkreises (104), wobei der Schritt des Erfassens (205) der Kontur des elektronischen Schaltkreises (104) das Bestimmen der Größe der von der Kontur des elektronischen Schaltkreises (104) begrenzten Fläche umfasst und der Schritt des Verifizierens (207) des Halbzeugs (101) das Verifizieren des Halbzeugs (101) auf der Grundlage der Größe der von der Kontur begrenzten Fläche umfasst.

8. Verfahren (200) nach Anspruch 7, wobei die Größe der von der Kontur des elektronischen Schaltkreises (104) begrenzten Fläche bestimmt wird, indem in der Bildaufnahme innerhalb der Kontur des elektronischen Schaltkreises (104) zusammenhängende Pixel bestimmt werden, deren Lichtintensität kleiner als ein erster Intensitätsschwellenwert ist.

9. Verfahren (200) nach einem der Ansprüche 7 bis 8, wobei die Kontur des elektronischen Schaltkreises (104), insbesondere durch Kantenerkennung oder Mustererkennung, erfasst wird.

10. Verfahren (200) nach einem der Ansprüche 7 bis 9, wobei die Bildaufnahme durch die Bildkamera (107) überbelichtet wird, um in der Bildaufnahme Bereiche außerhalb der Kontur des elektronischen Schaltkreises (104) auszublenden.

11. Verfahren (200) nach einem der Ansprüche 7 bis 10, wobei das Halbzeug (101) mittels der Beleuchtungsquelle (105) mit Licht einer vorbestimmten Intensität überbelichtet wird, um in der Bildaufnahme Bereiche außerhalb der Kontur des elektronischen Schaltkreises (104) auszublenden.

12. Verfahren (200) nach einem der Ansprüche 7 bis 11, wobei der Schritt des Beleuchtens (201) des Halbzeugs (101) mittels der Beleuchtungsquelle (105) das Beleuchten des Halbzeugs (101) mit UV-Licht umfasst oder der Schritt des Erfassens (203) der Bildaufnahme des beleuchteten Halbzeugs (101) mit dem elektronischen Schaltkreis (104) mittels einer Bildkamera (107) das Erfassen der Bildaufnahme im UV-Licht umfasst.

## Claims

1. An inspection device (100) for verifying a semi-finished product (101) for producing a chip card with an electronic circuit (104), the inspection device comprising:
an illumination source (105) configured to illuminate the semi-finished product (101) with light of a predetermined wavelength;
an image camera (107) which is configured to capture an image acquisition of the illuminated semi-finished product (101) with the electronic circuit (104); and
a processor (109) which is configured to detect a contour of the electronic circuit (104) in the image acquisition and to verify the semi-finished product (101) on the basis of the detected contour of the electronic circuit (104), wherein the processor (109) is configured to determine the size of the area delimited by the contour of the electronic circuit (104) and to verify the semi-finished product (101) on the basis of the size of the area delimited by the contour.

2. The inspection device (100) of claim 1, wherein the processor (109) is configured to determine the number of contiguous pixels in the image acquisition within the contour of the electronic circuit (104) whose light intensity is less than a first intensity threshold in order to determine the size of the area delimited by the contour of the electronic circuit (104).

3. The inspection device (100) according to one of the preceding claims, wherein the processor (109) is configured to detect the contour of the electronic circuit (104), in particular configured to detect the contour of the electronic circuit (104) by edge detection or pattern recognition.

4. The inspection device (100) according to one of the preceding claims, wherein the image camera (107) is configured to overexpose the image acquisition in order to hide areas outside the contour of the electronic circuit (104) in the image acquisition.

5. The inspection device (100) according to one of the preceding claims, wherein the illumination source (105) is configured to overexpose the semi-finished product (101) with light of a predetermined intensity in order to hide areas outside the contour of the electronic circuit (104) in the image acquisition.

6. The inspection device (100) according to any one of the preceding claims, wherein the illumination source (105) is configured to illuminate the semi-finished product (101) with UV light or the image camera (107) is configured to capture the image acquisition in UV light.

7. A method (200) for verifying a semi-finished product (101) for producing a chip card with an electronic circuit (104), the method comprising:
illuminating (201) the semi-finished product (101) by means of an illumination source (105);
capturing (203) an image acquisition of the illuminated semi-finished product (101) with the electronic circuit (104) by means of an image camera (107);
detecting (205) a contour of the electronic circuit (104) in the image acquisition; and
verifying (207) the semi-finished product (101) on the basis of the detected contour of the electronic circuit (104), wherein the step of detecting (205) a contour of the electronic circuit (104) comprises the determination of the size of the area delimited by the contour of the electronic circuit (104) and wherein the step of verifying (207) the semi-finished product (101) comprises the verification of the semi-finished product (101) on the basis of the size of the area delimited by the contour.

8. The method (200) of claim 7, wherein the size of the area delimited by the contour of the electronic circuit (104) is determined by determining contiguous pixels in the image acquisition within the contour of the electronic circuit (104) whose light intensity is less than a first intensity threshold.

9. The method (200) according to one of claims 7 to 8, wherein the contour of the electronic circuit (104) is detected, in particular the contour of the electronic circuit (104) is detected by edge detection or pattern recognition.

10. The method (200) according to one of claims 7 to 9, wherein the image acquisition is overexposed by the image camera (107) in order to hide areas outside the contour of the electronic circuit (104) in the image acquisition.

11. The method (200) according to one of claims 7 to 10, wherein the semi-finished product (101) is overexposed by means of the illumination source (105) with light of a predetermined intensity in order to hide regions outside the contour of the electronic circuit (104) in the image acquisition.

12. The method (200) according to one of claims 7 to 11, wherein the step of illuminating (201) the semi-finished product (101) by means of the illumination source (105) comprises the illumination of the semi-finished product (101) with UV light or wherein the step of capturing (203) of the image acquisition of the illuminated semi-finished product (101) with the electronic circuit (104) by means of an image camera (107) comprises the capturing of the image acquisition in UV light.

## Revendications

1. Dispositif d'inspection (100) destiné à vérifier un demi-produit (101) destiné à la fabrication d'une carte à puce pourvue d'un circuit électronique (104), comprenant :
une source de lumière d'éclairage (105), qui est configurée pour éclairer le demi-produit (101) avec de la lumière ayant une longueur d'onde prédéterminée ;
un appareil photographique (107), qui est configuré pour capturer une prise de vue du demi-produit (101) comprenant le circuit électronique (104) éclairé ; et
un processeur (109), qui est configuré pour capturer une prise de vue d'un contour du circuit électronique (104) et vérifier le demi-produit (101) sur la base du contour capturé du circuit électronique (104), le processeur (109) étant configuré pour déterminer la taille de la surface délimitée par le contour du circuit électronique (104) et pour vérifier le demi-produit (101) sur la base de la taille de la surface délimitée par le contour.

2. Dispositif d'inspection (100) selon la revendication 1, le processeur (109) étant configuré pour déterminer dans la prise de vue, à l'intérieur du contour du circuit électronique (104), le nombre de pixels contigus dont l'intensité lumineuse est inférieure à une première valeur de seuil d'intensité lumineuse afin de déterminer la taille de la surface délimitée par le contour du circuit électronique (104).

3. Dispositif d'inspection (100) selon l'une des revendications précédentes, le processeur (109) étant configuré pour détecter le contour du circuit électronique (104), notamment par reconnaissance de bord ou par reconnaissance de modèle.

4. Dispositif d'inspection (100) selon l'une des revendications précédentes, l'appareil photographique (107) étant configuré pour surexposer la prise de vue afin de masquer dans la prise de vue les zones à l'extérieur du contour du circuit électronique (104).

5. Dispositif d'inspection (100) selon l'une des revendications précédentes, la source d'éclairage (105) étant configurée pour surexposer le demi-produit (101) avec de la lumière ayant une intensité prédéterminée afin de masquer dans la prise de vue les zones à l'extérieur du contour du circuit électronique (104).

6. Dispositif d'inspection (100) selon l'une des revendications précédentes, la source d'éclairage (105) étant configurée pour éclairer le demi-produit (101) avec de la lumière UV ou l'appareil photographique (107) étant configuré pour capturer la prise de vue dans la lumière UV.

7. Procédé (200) pour vérifier un demi-produit (101) destiné à la fabrication d'une carte à puce pourvue d'un circuit électronique (104), comprenant :
éclairage (201) du demi-produit (101) au moyen d'une source de lumière d'éclairage (105) ;
capture (203) d'une prise de vue du demi-produit (101) comprenant le circuit électronique (104) éclairé ;
capture (205) d'un contour du circuit électronique (104) dans la prise de vue ; et
vérification (207) du demi-produit (101) sur la base du contour capturé du circuit électronique (104), l'étape de capture (205) du contour du circuit électronique (104) comprenant la détermination de la taille de la surface délimitée par le contour du circuit électronique (104) et l'étape de vérification (207) du demi-produit (101) comprenant la vérification du demi-produit (101) sur la base de la taille de la surface délimitée par le contour.

8. Procédé (200) selon la revendication 7, la taille de la surface délimitée par le contour du circuit électronique (104) étant déterminée en déterminant dans la prise de vue, à l'intérieur du contour du circuit électronique (104), les pixels contigus dont l'intensité lumineuse est inférieure à une première valeur de seuil d'intensité lumineuse.

9. Procédé (200) selon l'une des revendications 7 à 8, le contour du circuit électronique (104) étant notamment détecté par reconnaissance de bord ou par reconnaissance de modèle.

10. Procédé (200) selon l'une des revendications 7 à 9, la prise de vue par l'appareil photographique (107) étant surexposée afin de masquer dans la prise de vue les zones à l'extérieur du contour du circuit électronique (104).

11. Procédé (200) selon l'une des revendications 7 à 10, le demi-produit (101) étant surexposé au moyen de la source d'éclairage (105) avec de la lumière ayant une intensité prédéterminée afin de masquer dans la prise de vue les zones à l'extérieur du contour du circuit électronique (104).

12. Procédé (200) selon l'une des revendications 7 à 11, l'étape d'éclairage (201) du demi-produit (101) au moyen de la source d'éclairage (105) comprenant l'éclairage du demi-produit (101) avec de la lumière UV, ou l'étape de capture (203) de la prise de vue du demi-produit (101) comprenant le circuit électronique (104) éclairé au moyen d'un appareil photographique (107) comprenant la capture de la prise de vue dans la lumière UV.
